# EUROPEAN PATENT SPECIFICATION

(11) **EP 1 111 005 B1**
(45) Date of publication and mention of the grant of the patent: **28.09.2005**
(21) Application number: 00311653.0
(22) Date of filing: 22.12.2000
(51) Int. Cl.: C08L 9/02, C08L 27/06

(54) **Fuel system hose**
Kraftstoffschlauch
Tuyau pour de l'essence

(30) Priority: 22.12.1999 JP 36448499
(43) Date of publication of application: 27.06.2001
(73) Proprietor: ZEON CORPORATION, Tokyo (JP); TOYODA GOSEI CO., LTD., Aichi-ken (JP)
(72) Inventor: Konno, Tsuyoshi, c/o Research & Development Ctr., Kawasaki-ku, Kawasaki-shi (JP); Saya, Toshiaki, c/o Research & Development Ctr., Kawasaki-ku, Kawasaki-shi (JP); Suzuki, Atsushi, c/o Toyoda Gosei Co., Ltd., Nishikasugai-gun, Aichi-ken (JP); Fujiware, Hideyuki, c/o Toyoda Gosei Co., Ltd., Nishikasugai-gun, Aichi-ken (JP); Tsutsumi, Daisuke, c/o Toyoda Gosei Co., Ltd., Nishikasugai-gun, Aichi-ken (JP)
(74) Representative: Stoner, Gerard Patrick

(56) References cited:
- EP-A- 0 069 278
- WO-A-99/54132

## Description

### BACKGROUND

The present invention relates to hoses e.g. fuel hoses, or other fuel system components liable to flexion, and to articles such as hoses comprising the vulcanised product of rubber compositions.

With environmental problems assuming increasing more serious aspects, the improvement of the performances of fuel system hoses used for fuel piping of automobiles and the like has been greatly required to reduce the evaporation of fuel oils, such as gasoline, into the air.

Previously, as the material for fuel system hoses, there has been used medium high nitrile rubber (acrylonitrile-butadiene copolymer rubber, hereinafter referred to as "NBR") having a bound acrylonitrile content of about 33.5% by weight or a blend comprising high NBR having a bound acrylonitrile content of about 41% by weight and poly(vinylchloride) (PVC) (the blend of NBR and PVC being hereinafter sometimes referred to as "polyblend"), being materials providing a balance of ozone resistance, gasoline swelling resistance and low temperature resistance.

However, fuel system hoses produced from the above-mentioned material alone are rather highly permeable to gasoline, and hence previous fuel system hoses can hardly meet the requirement of further reducing the amount of gasoline evaporating into the air.

For improving the resistance to fuel permeation of fuel system hoses, it has been proposed to use a blend of ultra-high NBR (having a bound acrylonitrile content of 43% by weight or more) with poly(vinyl chloride) (JP-A-4-171381).

However, when a hose comprising a polyblend of common ultra-high NBR and poly(vinyl chloride) is produced by extruding such a polyblend into the form of a hose, inserting a mandrel thereinto, and vulcanizing by using a vulcanizer, the resulting hose is apt to develop cracks at its end face and bend.

EP0069278 discloses stabilizer compounds for NBR/PVC polymer mixtures.

WO 99/54132 discloses a laminate of cross-linked nitrile rubbers including an inner layer formation containing α,β-ethylenically unsaturated monomer units in an amount of 43 to 60 wt%.

A general aim herein is to provide new and useful rubber compositions having properties preferably useful for producing a fuel system hose excellent in resistance to fuel permeation and resistance to low temperature without development of cracks even when a mandrel is inserted into an unvulcanised rubber hose and the hose is vulcanisation-formed.

The present inventors have made extensive study to attain the above-mentioned object. As a result, it has been found out that a fuel system hose excellent in resistance to fuel permeation and resistance to low temperature can be produced, without development of cracks even when a mandrel is inserted into an unvulcanized rubber hose and the hose is vulcanized, by using as the ultra-high nitrile rubber a ultra-high nitrile rubber which has a higher polymer Mooney viscosity than common ultra-high nitrile rubbers hitherto used having a Mooney viscosity (ML₁₊₄, 100°C) of about 45-90. The present invention has been accomplished on the basis of above finding.

Thus, according to the present invention, there are provided a fuel system hose comprising the vulcanized product of a rubber composition comprising a nitrile rubber (a) having a bound unsaturated nitrile content of 43-60% by weight and a polymer Mooney viscosity (ML₁₊₄, 100°C) of 95-140 and a vinyl chloride resin (b).

### DETAILED DESCRIPTION

Some embodiments of the present invention are described in detail below.

The nitrile rubber used in the present invention is a rubber obtained by copolymerizing an α, β-ethylenically unsaturated nitrile monomer with a conjugated diene monomer.

Specific examples of the α, β-ethylenically unsaturated nitrile monomer include vinyl cyanides, such as acrylonitrile, methacrylonitrile and α-chloroacrylonitrile.

Specific examples of the conjugated diene monomers include 2-methyl-1,3-butadiene, 1,3-butadiene, 1,3-pentadiene, isoprene and 2-chloro-1,3-butadiene. These monomers may be used each alone or in a combination of two or more thereof.

Besides the above-mentioned monomers, if desired and within a range not deleterious to the effect of the present invention, other monomers copolymerizable therewith may be used in place of a part of the conjugated diene monomer. The copolymerizable other monomers are not particularly limited and may be, for example, aromatic vinyl monomers, such as styrene, α-methylstyrene and vinylpyridine; nonconjugated diene monomers, such as vinylnorbornene, dicyclopentadiene and 1,4-hexadiene; α, β-ethylenically unsaturated carboxylic acids, such as acrylic acid, methacrylic acid, maleic acid and maleic anhydride; alkyl acrylates and alkyl methacrylates, (which may have a substituent, such as a hydroxyl group, cyano group and alkoxyl group having 1-5 carbon atoms) wherein the alkyl group has 1-10 carbon atoms; and α, β-ethylenically unsaturated dicarboxylic acid ester monomers, such as monoalkyl esters of α, β-ethylenically unsaturated dicarboxylic acids wherein the alkyl group has 1-10 carbon atoms and dialkyl esters of α, β-ethylenically unsaturated dicarboxylic acids wherein the alkyl group has 1-10 carbon atoms. These monomers may be used each alone or in a combination of two or more thereof. The content of these other monomers in the copolymer is usually not more than 15% by weight, preferably not more than 10% by weight, more preferably not more than 5% by weight. A higher content than mentioned above may adversely affect the resistance to low temperature and the resistance to fuel permeation of the hose. A particularly preferred nitrile rubber in the present invention is a copolymer rubber of acrylonitrile with butadiene (NBR).

The nitrile rubber used in the present invention is usually produced by radical-copolymerizing the above-mentioned monomers. The methods of polymerization is not particularly limited, and any method of polymerization known previously, e.g., emulsion polymerization, suspension polymerization and solution polymerization, may be used, particularly preferred being emulsion polymerization.

The emulsion polymerization is usually a process wherein a monomer, organic solvent, polymerization initiator, emulsifier, chain transfer agent, etc. are added to an aqueous medium (usually water) and the monomer is polymerized. The process may be any of the batch wise one, semi-batch wise one and continuous one. The emulsifier used may be previously known ones and is not particularly limited. The examples thereof include anionic surfactants (e.g., higher alcohol sulfuric ester salts, alkylbenzenesulfonic acid salts and aliphatic carboxylic acid ester sulfonic acid salts), nonionic ones (e.g., polyethylene glycol alkyl ester type, alkylphenyl ether type and alkyl ether type) and amphoteric ones (comprising, as the anionic moiety, carboxylic acid salts, sulfuric ester salts, sulfonic acid salts, phosphoric acid salts or phosphoric ester salts, and, as the cationic moiety, amine salts or quaternary ammonium salts). The polymerization initiator also may be any of the radical polymerization initiators known to the art and is not particularly limited. It may be, for example, redox type catalysts comprising a combination of a reducing agent, such as ferrous salts and tetraethylenepentamine, with an inorganic peroxide, such as hydrogen peroxide and potassium persulfate, or with an organic peroxide, such as cumene hydroperoxide, diisopropylbenzene hydroperoxide and paramenthane hydroperoxide. The polymerization temperature also is not particularly limited; polymerization may be ordinarily carried out over the range of 0° to 50°C.

The nitrile rubber used in the present invention has a bound unsaturated nitrile monomer content in the rubber in the range of 43-60% by weight, preferably 44-55% by weight, more preferably 44-52% by weight. When the content is higher than the above-mentioned range, the hose obtained is poor in resistance to low temperature; when it is lower than the range, the hose has insufficient resistance to fuel permeation.

The polymer Mooney viscosity (ML₁₊₄, 100°C; determined according to JIS K6300) of the nitrile rubber is at least 95. When the viscosity is lower, we find that cracks are liable to develop e.g. when a mandrel is inserted into a hose and the hose is vulcanisation-formed. The viscosity is up to 140, preferably up to 130, more preferably up to 120. Excessive viscosity of the rubber composition makes forming and processing difficult.

The vinyl chloride resin used in the present invention may be, for example, vinyl chloride homopolymer (poly(vinylchloride)) or copolymer resins of vinyl chloride and monomer copolymerizable therewith.

The copolymerizable monomer is not particularly limited and may be, for example, vinyl esters, such as vinyl acetate, vinyl propionate and vinyl laurate; acrylic acid esters, such as methyl acrylate, ethyl acrylate and butyl acrylate; methacrylic acid esters, such as methyl methacrylate and ethyl methacrylate; fumaric acid esters, such as dibutyl fumarate and diethyl fumarate; vinyl ethers, such as vinylmethyl ether and vinyl octyl ether; α-olefins, such as ethylene, propylene and styrene; vinylidene halides or vinyl halides other than vinyl chloride, such as vinylidene chloride and vinyl bromide; and multifunctional monomers, such as diacryl phthalate and ethylene glycol dimethacrylate. These monomers may be used each alone or in a combination of two or more thereof. The content of copolymerisable monomer in the copolymer is usually not more than 15% by weight, preferably not more than 10% by weight, more preferably not more than 5% by weight. When the content is higher than the above-mentioned range, the hose obtained by using the copolymer may possibly be poor in resistance to ozone, resistance to fuel permeation and resistance to low temperature. Preferred among the vinyl chloride resins used in the present invention is poly(vinyl chloride).

The vinyl chloride resin may be produced by radical-polymerizing the above-mentioned monomer(s) in a known manner and process of polymerization. For example, suspension polymerization, emulsion polymerization and bulk polymerization may be used. The polymerization may be conducted by using any known process including the batchwise process and the continuous process.

The average degree of polymerization of such vinyl chloride resins may be e.g. from 550 [specific viscosity; 0.239 (ASTM D-1234-58-T), K-Value; 53.8] to 2500 [specific viscosity; 0.61 (ASTM D-1234-58-T), K-Value; 92], preferably 600 [specific viscosity; 0.250 (ASTM D-1234-58-T), K-Value; 55] - 2200 [specific viscosity; 0.59 (ASTM D-1234-58-T), K-Value; 87], more preferably 650 [specific viscosity; 0.264 (ASTM D-1234-58-T), K-Value; 56.3] - 2000 [specific viscosity; 0.55 (ASTM-D-1234-58-T), K-Value; 83.2]. When it is smaller than the above-mentioned range, the ozone resistance of the nitrile rubber tends to be less good. When it is larger than the range, the viscosity of the resulting rubber composition tends to be so high that the processing of the composition becomes difficult.

A rubber composition is produced by mixing and kneading a nitrile rubber and a vinyl chloride resin. Though the nitrile rubber and the vinyl chloride resin may be mixed in the course of mixing a vulcanizing agent and other compounding ingredients, usually they are used in the form of a polyblend prepared by mixing the nitrile rubber and the vinyl chloride resin beforehand. Mixing of a vinyl chloride resin into a nitrile rubber imparts ozone resistance to the nitrile rubber.

Though the method for preparing a polyblend is not particularly limited, the polyblend may be usually prepared by using known methods, which include, for example, a dry blending method wherein a nitrile rubber and a vinyl chloride resin are blended at a high temperature with a kneading machine, such as a Banbury mixer, kneader and internal mixer, or a latex coprecipitation method wherein the two component resins are mixed in the form of latex, then coagulated (coprecipitated) and dried, and thereafter heat-treated by using an extruder or a kneading machine, such as a Banbury mixer, kneader or internal mixer.

The usual mixing ratio of the nitrile rubber and the vinyl chloride resin in producing the polyblend or the rubber composition is in the range of 95-50% by weight of the nitrile rubber and 5-50% by weight of the vinyl chloride resin, preferably in the range of 90-55% by weight and 10-45% by weight, respectively, and more preferably in the range of 85-60% by weight and 15-40% by weight, respectively. When the ratio of the vinyl chloride resin is higher than the above-mentioned range, the heat resistance tends to decrease and the compression set tends to increase; when it is lower than the range, the resistance to ozone and the resistance to fuel permeation may sometimes deteriorate.

In producing rubber goods by using the described rubber composition, a vulcanizing agent is compounded into the rubber composition. The vulcanizing agent used in the present invention may be e.g. a sulfur-containing vulcanizing agent or an organic peroxide vulcanizing agent respectively known to the art, and is not particularly limited.

The sulfur-containing vulcanizing agent may be, for example, sulfur and sulfur donative compounds (such as thiuram type compounds and morpholine type compounds). The sulfur-containing vulcanizing agent may be used together with a known vulcanization auxiliary, such as zinc white and stearic acid, and a known vulcanization accelerator of various kinds (such as thiuram type, guanidine type, sulfenamide type, thiazole type and dithiocarbamic acid type).

The amounts of the sulfur-containing vulcanizing agent and the vulcanization accelerator used in the present invention are not particularly limited. However, the sulfur-containing vulcanizing agent and the vulcanization accelerator are used, relative to 100 parts by weight of a polyblend comprising a nitrile rubber and a vinyl chloride resin, respectively in an amount of 0.01-10 parts by weight and 1-20 parts by weight, preferably 0.05-8 parts by weight and 2-15 parts by weight, more preferably 0.1-5 parts by weight and 2-10 parts by weight. When the amount(s) is(are) outside the above-mentioned range, the vulcanization speed tends to be too high or too low, making the rubber processing difficult.

The organic peroxide vulcanizing agent used is an organic peroxide or a combination thereof with a vulcanization auxiliary. The "organic peroxide" refers to an organic compound having an (-O-O-) structure in the molecule and is, for example, dicumyl peroxide, dit-butyl peroxide, t-butylcumyl peroxide, benzoyl peroxide, 2,4-dichlorobenzyl peroxide, 2,5-dimethyl-2,5-di-(t-butylperoxy)hexyne-3,2,5-dimethyl-2,5-di(t-butylperoxy)hexane, 1,1-di(t-butylperoxy)-3,3,5-trimethylcyclohexane, t-butylperoxybenzoate, and 1,3-di(t-butylperoxyisopropyl)benzene.

The vulcanization auxiliary used in combination with an organic peroxide is a compound having a multiple unsaturation bond in the molecule and may be, for example, such multi-functional monomers as triallyl cyanurate, triallyl isocyanurate, trimethylolpropane trimethylacrylate, ethylene dimethacrylate, diallyl phthalate, toluylene bismaleimide, metaphenylene bismaleimide, and divinylbenzene; and a liquid vinylpolybutadiene.

The amounts of the organic peroxide and the vulcanization auxiliary are not particularly limited but may be, per 100 parts by weight of the polyblend, respectively 0.1-10 parts by weight and 0.5-20 parts by weight, preferably 0.2-8 parts by weight and 0.7-10 parts by weight, more preferably 0.3-5 parts by weight and 1-5 parts by weight. When the amount(s) is(are) outside the above-mentioned range, the vulcanization speed tends to be too low or too high, making the rubber processing difficult.

The rubber composition containing the vulcanizing agent can be produced by mixing and blending a nitrile rubber, vinyl chloride resin, vulcanizing agent and, according to necessity, one or more other compounding ingredients, for example, reinforcing agents such as carbon black and silica, fillers such as calcium carbonate and clay, softeners, plasticizes (of phthalate type, adipate type, sebacate type, phosphate type, polyether type, polyester type, etc.), antioxidants (of amine type, phenol type, etc.), stabilizers and processing aids, by using a kneading machine, such as a roll, Banbury mixer, kneader, and internal mixer. In the present invention, the kinds and the amounts of the compounding ingredients other than the vulcanizing agent to be used are not particularly limited and can be appropriately selected and determined so as to attain the characteristic properties and other factors required for fuel system hoses and other rubber goods. Preferably the polymer content of the rubber composition consists substantially, essentially or entirely of the mentioned blend of the mentioned rubber and resin.

The "fuel system hose" obtained by vulcanising the rubber composition may refer especially to hoses used in automobiles, autocycles and the like for filling fuel oils such as gasoline and alcohol-blended gasoline into a fuel tank or transporting them to an engine or the like; specific examples thereof include a fuel hose, fuel inlet hose, fuel breather hose, evaporation hose, and hoses for clearing the ORVR (onboard refuelling vapour recovery) regulation.

The fuel system hose of the present invention may be produced by known methods as extrusion and injection, and is not particularly limited as to the method for the production thereof. One example of the method of production comprises first forming a rubber composition containing a vulcanising agent of the present invention into an unvulcanized rubber hose of a prespecified form by extrusion, then inserting a mandrel (made of a metal, resin or the like) having a predetermined shape into the unvulcanized rubber hose obtained above, and then processing the rubber hose through a steam vulcanization step using a vulcanizer into a fuel system hose of the ultimate product. Though the vulcanization conditions are not particularly limited, the vulcanization is usually performed under conditions of a temperature of 130°C-170°C and a pressure of 0.2-7.5 MPa for 15-20 minutes.

Using the teachings herein one can provide a rubber composition which develops no cracks when processed in a vulcanizer by using a mandrel and is suitable for producing a fuel system hose excellent in resistance to fuel permeation and resistance to low temperature.

### DESCRIPTION OF EMBODIMENTS

The present invention is described in detail below with reference to Examples and Comparative Examples. Hereinafter, part and % are respectively by weight unless otherwise stated.

### Examples 1-2, Comparative Example 1-3

A plurality of polyblends respectively comprising 70 parts of ultra-high NBRs different in polymer Mooney viscosity (ML₁₊₄, 100°C) (bound acrylonitrile content 46%, polymer Mooney viscosity 60-110) and 30 parts of poly(vinyl chloride) having an average degree of polymerization of 800 [specific viscosity; 0.31 (ASTM D-1234-58-T), K-Value; 60.6] were prepared by using a hot roll.

According to the compounding formulations shown in Table 1, the polyblends obtained above and various compounding ingredients other than the vulcanizing agent were mixed and kneaded by using a small-sized Banbury mixer, then, by using a roll a vulcanizing agent was added to each of the mixtures obtained above and mixed and kneaded to obtain various kinds of vulcanizable rubber compositions.

**Table 1**

| Compounding Formulation | | | | | |
|---|---|---|---|---|---|
| Compounding Formulation | Comparative Example | | | Example | |
| | 1 | 2 | 3 | 1 | 2 |
| Polyblend (Mooney viscosity of ultra-high NBR) | 100 (65) | 100 (80) | 100 (90) | 100 (97) | 100 (110) |
| Zinc oxide | 5 | 5 | 5 | 5 | 5 |
| Stearic acid | 1 | 1 | 1 | 1 | 1 |
| FEF carbon(1) | 45 | 45 | 45 | 45 | 45 |
| Plasticizer (2) | 30 | 30 | 30 | 30 | 30 |
| Sulfur | 0.5 | 0.5 | 0.5 | 0.5 | 0.5 |
| TMTD (3) | 1.5 | 1.5 | 1.5 | 1.5 | 1.5 |
| CBS (4) | 1.5 | 1.5 | 1.5 | 1.5 | 1.5 |

| | | | | | |
|---|---|---|---|---|---|
| Note: (1) Carbon black Seast SO, mfd. by TOKAI CARBON CO., LTD. | | | | | |
| (2) ADEKA CIZER RS 107, mfd. by ASAHI DENKA KOGYO K.K. | | | | | |
| (3) Tetramethylthiuram disulfide | | | | | |
| (4) N-Cyclohexyl-2-benzothiazyl sulfenamide | | | | | |

The compound Mooney viscosity (M₁₊₄, 100°C) of the rubber composition was determined according to JIS K6300.

The rubber composition obtained above was press-vulcanized under conditions of 150°C and 30 minutes to form a uniform vulcanized sheet 2 mm in thickness, which was subjected to determination of tensile properties (tensile strength, elongation) and hardness according to JIS K6251. The fuel oil resistance (fuel oil C (isooctane;/toluene = 50/50 by volume)) was determined according to JIS K6258 from the volume change observed after immersion of the specimen in the oil at 40°C for 48 hours. The low temperature resistance test was conducted according to JIS K6261.

The crack evaluation test at the time of vulcanization forming using a vulcanizer was performed as follows.

Each of the above-mentioned rubber compositions was formed into an unvulcanized rubber hose having an inner diameter of 4.0 mm and an outer diameter of 8.0 mm. Mandrels coated with a releasing agent and having different diameters (diameter: 5.5 mm, 6.0 mm, 6.5 mm), 5 mandrels each for respective diameters, were prepared, and respectively inserted into the unvulcanized rubber hoses (number of test, n=5). Thereafter, each of the unvulcanized rubber hoses having the mandrels inserted therein was steam-vulcanized in a vulcanizer under a pressure of 3.8 kgf/cm² at 150°C for 30 minutes. The vulcanized rubber hose obtained was taken out and examined for the state of development of cracks at the end and the bend of the rubber hose by visual observation.

The fuel (gasoline) permeability was measured by the aluminum cup method. A specified amount of fuel oil C (isooctane/toluene = 50/50 by volume) was placed in an aluminum cup of a 100-ml volume, then the cup was capped with a vulcanized sheet of 2 mm thickness cut out in the form of disc having a diameter of 61 mm, and the cup and the sheet were fixed with a clamp (effective area: 25.5 cm²). The resulting test assembly was allowed to stand in a constant temperature bath at 40°C, and the weight of the assembly was measured every 24 hours. The permeation coefficient was calculated from the maximum decrease in amount of fuel oil with the lapse of time.

The results of the above-mentioned tests are shown in Table 2.

From the comparison of the results of Examples 1 and 2 with the results obtained by using the polyblends of Comparative Examples 1, 2 and 3 shown in Table 2, it is revealed that when the polyblend of a ultra-high NBR having a polymer Mooney viscosity of 97 or 110 with poly(vinyl chloride) of Example 1 or 2 is used, the fuel oil resistance (volume change, permeability) and the low temperature resistance are not deteriorated and no cracks develop at all at the time of vulcanizer forming wherein the mandrel has been inserted and that thus a fuel oil system hose can be obtained which is excellent in resistance to crack development at the time of vulcanization forming thereof and is excellent in fuel oil resistance and low temperature resistance.

Similar results were obtained when confirmation tests were conducted with the same hoses as those for practical use prepared by using the rubber compositions of Example 1 and Comparative Example 3. Thus, when a polyblend of ultra-high NBR having a polymer Mooney viscosity of 97 with poly(vinyl chloride) was used, no cracks were observed at all at the time of vulcanizer forming wherein the mandrel has been inserted, whereas when a polyblend employing ultra-high NBR having a polymer Mooney viscosity of 90 was used, about 3% of defective products due to crack development were observed.

**Table 2**

| (Test Results) | | | | | | |
|---|---|---|---|---|---|---|
| Test Item | | Comparative Example | | | Example | |
| | | 1 | 2 | 3 | 1 | 2 |
| Compound Mooney viscosity (ML1+4, 100°C) | | 35 | 41 | 44 | 48 | 54 |
| Crack evaluation test (number of hoses developing cracks) | | | | | | |
| Mandrel diameter | 5.5mm | 5 | 4 | 2 | 0 | 0 |
| | 6.0mm | 5 | 5 | 3 | 0 | 0 |
| | 6.5mm | 5 | 5 | 4 | 0 | 0 |
| Tensile property | | | | | | |
| Tensile strength (MPa) | | 18.6 | 18.8 | 18.9 | 19.2 | 19.4 |
| Elongation (%) | | 440 | 440 | 440 | 430 | 430 |
| Hardness (Duro A) | | 71 | 71 | 71 | 71 | 71 |
| Fuel oil resistance | | | | | | |
| Volume change (%) | | +13 | +13 | +13 | +13 | +13 |
| Fuel permeability | | | | | | |
| Permeation amount (mg.mm/m2/day) | | 274 | 272 | 272 | 271 | 268 |
| Low temperature resistance | | | | | | |
| Brittle temperature (°C) | | -28 | -28 | -28 | -28 | -28 |

## Claims

1. A hose comprising vulcanised rubber, wherein the vulcanised rubber of the hose consists of a vulcanised product of a rubber composition comprising:
(a) nitrile rubber having a bound unsaturated nitrile content of from 43-60% by weight, and a polymer Mooney viscosity (ML₁₊₄, 100°C) of from 95 to 140; and
(b) vinyl chloride resin.

2. A hose according to claim 1 wherein the proportions of the nitrile rubber (a) and the vinyl chloride resin (b) in the rubber composition are 95-50% by weight and 5-50% by weight, respectively.

3. A hose according to claim 2, wherein the proportions of the nitrile rubber and vinyl chloride resin are 85-60 wt% and 15-40 wt% respectively.

4. A hose according to claim 1, 2 or 3 wherein the vinyl chloride resin has an average degree of polymerisation of from 550-2500.

5. A hose according to any one of claims 1 to 4 wherein said Mooney viscosity of the nitrile rubber is from 95 to 130.

6. A hose according to claim 5 wherein said Mooney viscosity of the nitrile rubber is from 95 to 120.

7. A hose according to any one of the preceding claims which is a fuel system hose.

8. A method of making a hose according to any one of claims 1 to 7, comprising the steps of:
forming an unvulcanised rubber hose from a rubber composition as defined in any one of claims 1 to 7 containing vulcanising agent;
inserting a mandrel into the unvulcanised hose; and
vulcanising the hose.

## Patentansprüche

1. Schlauch, umfassend vulkanisierten Kautschuk, wobei der vulkanisierte Kautschuk des Schlauchs aus einem vulkanisierten Produkt einer Kautschukzusammensetzung besteht, welche umfasst:
(a) Nitrilkautschuk mit einem gebundenen ungesättigten Nitrilgehalt von 43 bis 60 Gew.-%, und einer Mooney-Viskosität des Polymers (ML₁₊₄, 100°C) von 95 bis 140; und
(b) Vinylchloridharz.

2. Schlauch gemäß Anspruch 1, wobei die Anteile des Nitrilkautschuks (a) und des Vinylchloridharzes (b) in der Kautschukzusammensetzung 95 bis 50 Gew.-% bzw. 5 bis 50 Gew.-% betragen.

3. Schlauch gemäß Anspruch 2, wobei die Anteile des Nitrilkautschuks und des Vinylchloridharzes 85 bis 60 Gew.-% bzw. 15 bis 40 Gew.-% betragen.

4. Schlauch gemäß Anspruch 1, 2 oder 3, wobei das Vinylchloridharz einen mittleren Polymerisationsgrad von 550 bis 2500 aufweist.

5. Schlauch gemäß einem der Ansprüche 1 bis 4, wobei die Mooney-Viskosität des Nitrilkautschuks 95 bis 130 beträgt.

6. Schlauch gemäß Anspruch 5, wobei die Mooney-Viskosität des Nitrilkautschuks 95 bis 120 beträgt.

7. Schlauch gemäß einem der vorstehenden Ansprüche, welcher ein Schlauch eines Treibstoffsystems ist.

8. Verfahren zur Herstellung eines Schlauchs nach einem der Ansprüche 1 bis 7, umfassend die Schritte:
Bilden eines nicht vulkanisierten Kautschukschlauchs aus einer Kautschukzusammensetzung nach einem der Ansprüche 1 bis 7, die ein Vulkanisierungsmittel enthält;
Einführen eines Doms in den nicht vulkanisierten Schlauch; und
Vulkanisieren des Schlauchs.

## Revendications

1. Tuyau en caoutchouc vulcanisé, dont le caoutchouc vulcanisé est le produit de vulcanisation d'une composition de caoutchouc comprenant :
a) un caoutchouc nitrile qui contient de 43 à 60 % en poids d'un nitrile insaturé lié et qui présente une viscosité Mooney de polymère (ML₁₊₄, 100 °C) de 95 à 140,
b) et une résine de chlorure de vinyle.

2. Tuyau conforme à la revendication 1, dans lequel le caoutchouc nitrile (a) et la résine de chlorure de vinyle (b) se trouvent, dans la composition de caoutchouc, en des proportions pondérales respectives de 95 à 50 % et de 5 à 50 %.

3. Tuyau conforme à la revendication 2, dans lequel les proportions pondérales respectives du caoutchouc nitrile (a) et de la résine de chlorure de vinyle (b) valent de 85 à 60 % et de 15 à 40 %.

4. Tuyau conforme à la revendication 1, 2 ou 3, dans lequel la résine de chlorure de vinyle présente un degré moyen de polymérisation de 550 à 2500.

5. Tuyau conforme à l'une des revendications 1 à 4, dans lequel ladite viscosité Mooney du caoutchouc nitrile vaut de 95 à 130.

6. Tuyau conforme à la revendication 5, dans lequel ladite viscosité Mooney du caoutchouc nitrile vaut de 95 à 120.

7. Tuyau conforme à l'une des revendications précédentes, qui est un tuyau pour système d'alimentation en carburant.

8. Procédé de fabrication d'un tuyau conforme à l'une des revendications 1 à 7, qui comporte les étapes suivantes :
- fabriquer un tuyau de caoutchouc non vulcanisé, à partir d'une composition de caoutchouc définie dans l'une des revendications 1 à 7 et contenant un agent de vulcanisation,
- insérer un mandrin dans le tuyau non vulcanisé,
- et vulcaniser le tuyau.
